**Europäisches Patentamt**

**European Patent Office**

**Office européen des brevets**

(11) Numéro de publication: **0 177 432**

**A1**

## (12) DEMANDE DE BREVET EUROPEEN

(21) Numéro de dépôt: 85420171.2

(51) Int. Cl.⁴: **G 01 N 31/22**

(22) Date de dépôt: 27.09.85

(30) Priorité: 28.09.84 FR 8415221

(43) Date de publication de la demande:
09.04.86 Bulletin 86/15

(84) Etats contractants désignés:
AT BE CH DE FR GB IT LI LU NL SE

(71) Demandeur: Société dite: LABORATOIRES STANDA
184 Avenue du Mal Galliéni
F-14001 Caen(FR)

(72) Inventeur: Legrand, Charles
14 Avenue de Creully
F-14000 Caen(FR)

(72) Inventeur: Roussel, Edmond
Avenay
F-14210 Evrecy(FR)

(74) Mandataire: Maisonnier, Jean
28 rue Servient
F-69003 Lyon(FR)

(54) Dispositif pour la gestion d'un stock de produits périssables, en fonction de la température et de la durée.

(57) L'invention concerne un dispositif pour caractériser l'état de conservation de denrées périssables (15), alimentaires ou autres.

Le badge autocollant (1) contient une ampoule transparente, dans laquelle évolue la coloration d'un mélange en cours de réaction bio-chimique. Ce mélange est visible à travers une ouverture de regard (8), qu'entourent des zones de références (11), (12), et...colorées différemment. Par comparaison de la coloration dans le regard (8) avec des documents de références, caractéristiques du produit (15) à conserver, on dispose d'une mémoire chimique caractérisant à la fois la durée de stockage du produit (15), et l'évolution des températures de stockage de ce même produit. La lecture de la coloration dans l'ouverture (8) peut s'effectuer par un lecteur chromatique à affichage automatique.

Application : caractérisation d'une denrée périssable, aussi bien en ce qui concerne son état instantané qu'en ce qui concerne la gestion prévisionnelle des stocks.

FIG 6.

Croydon Printing Company Ltd

0177432

La présente invention est relative à
un dispositif destiné à être utilisé en liaison avec des produits périssables , et notamment des produits alimentaires ,
afin de permettre , non seulement l'appréciaiton de leur état
de conservation à un instant donné ,. mais encore une gestion
rationnelle de ces produits tout au long de leur période de
stockage .

Il est bien connu que l'état de conservation de certaines denrées périssables , et notamment de
produits alimentaires , varie considérablement en fonction du
temps ( durée de stockage) et de la température ( température
à laquelle ils sont conservés) .

Ce problème est nettement compliqué par
le fait que , si au cours de sa période de stockage , le produit est soumis à des variations de températures , il garde
en mémoire ce déroulement chronologique de sa période de stockage , si bien que son état final de conservation n'est nullement caractérisé par le seul affichage d'une " date de fraîcheur " comme cela est de pratique courante .

A titre d'exemple , pour illustrer cette
difficulté , on rappellera que le processus de dépérissement
de la plupart des produits alimentaires se déroule dans le
temps d'une façon à la fois irréversible , et avec une vitesse de réaction  qui varie avec la température de stockage.
Ainsi , pour certains fromages à pâte cuite , présentés en
tranches , la vitesse de dépérissement à une température de
stockage de 20° C est environ dix fois supérieure à celle qu'
on observe pour un stockage à 10° C . Dans ces conditions ,on
comprend que deux produits stockés pendant la même durée puissent cependant se présenter au consommateur sous des états
de fraîcheur très différents . Bien  mieux , si ce fromage
est stocké habituellement à une température de 10°C , puis
soumis accidentellement à une température de 20° pendant quelques heures , pour être ensuite replacé à une température de
10° , son état final conserve en mémoire le dépérissement
accéléré auquel il a été soumis pendant sa période de stockage à 20° C .

Un autre exemple courant est celui des produits congelés . Ces produits sont conservés normalement à

2

une température nettement inférieure à 0° C ( par exemple aux environs de moins 20° C ) . Leur vitesse de dépérissement est alors très lente , presque nulle .Si , pour une raison ou pour une autre (panne temporaire d'un réfrigérateur ; transport , même de courte durée , dans un camion non réfrigéré), ces produits venaient à être décongelés , même pendant une très courte durée , il est bien connu qu'ils subiraient un dépérissement accéléré et irréversible , les rendant impropres à la consommation , même après recongélation . Or ,avec le système actuel , le consommateur qui achète un produit congelé , ne peut le faire qu'en confiance : rien ne lui indique si ce produit n'a pas été décongelé , même brièvement, puis recongelé .

Les exemples qui précèdent concernent les lacunes actuelles dans l'information du consommateur sur l'état des produits qu'il achète .Il existe cependant un autre problème , au moins aussi important , qui est celui de la gestion des stocks de denrées périssables . En effet ,les coopératives de production , les centrales d'achat , et même les commerçants gèrent actuellement leur stock de produits en se fondant uniquement sur les dates . Or , ainsi qu'on l' a rappelé ci-dessus , l'évolution chronologique des températures de stockage est un facteur au moins aussi important que la durée , et ce facteur n' est actuellement pas pris en compte pour la gestion des stocks . Ainsi , pour la composition d'un lot de produits à expédier , le gestionnaire du stock pourrait avoir intérêt à expédier d'abord un lot relativement récent (mais dont la température de stockage a subi des variations accélérant le dépérissement) , alors qu'un lot plus ancien ( mais constamment stocké à basse température) pourrait n'être expédié que plus tard .

La présente invention a pour but d' éviter ces inconvénients , en réalisant un dispositif d'un type nouveau , permettant de suivre l'évolution de conservation d'une denrée périssable , de garder en mémoire l'historique des conditions de stockage du produit ( durée et température successives) et d'en afficher , à chaque instant ,le résultat qui peut être lu facilement .

Pour cela ,l'invention propose à titre de produit industriel nouveau , un badge ou étiquette utilisant , en combinaison , divers éléments dont certains sont connus séparément .

En particulier , l'invention utilise un indicateur de pH , constitué par un produit chimique qui change de couleur après changement de pH , mélangé à une solution tampon et à un agent régulateur , comme décrit par exemple dans le brevet français 2 351 406 . Un tel indicateur chromatique peut être présenté sur un substrat enzymatique adsorbé , constitué par exemple par un grand nombre de petites particules sensiblement sphériques , comme décrit dans le brevet français 2 227 531 .

Un tel ensemble connu constitue un indicateur coloré qui est le siège d'une réaction biochimique tout au long de laquelle sa coloration visible évolue de façon progressive . La vitesse d'évolution de cette réaction biochimique ( et par conséquent , la vitesse d'évolution de la coloration correspondante) dépend , à chaque instant , de la température à laquelle est soumis le réactif . Autrement dit , le réactif constitue une sorte de mémoire chimique dont la coloration affiche , à chaque instant , un résultat caractérisant à la fois la durée depuis laquelle la réaction se développe , et les variations de la température à laquelle elle a eu l'occasion de se développer .

Un dispositif indicateur selon l'invention , destiné à être utilisé en liaison avec des denrées périssables , à la fois pour caractériser leur état instantané de conservation , et à permettre une gestion prévisionnelle des produits en stock , est caractérisé en ce qu'il comprend , en combinaison :

- au moins une ampoule transparente contenant un produit indicateur de pH , dont l'évolution interne en fonction du temps et de la température engendre une variation continue de la coloration par réaction chimique ou biochimique :

- une enveloppe de support sur laquelle figurent , au voisinage d'une partie visible de l'ampoule , au moins deux zones de référence ayant des couleurs fixes distinctes , choisies parmi celles par lesquelles passe le réactif indicateur au cours de l'évolution de sa réaction ;

- un document de référence dans lequel figurent à la fois les éléments permettant de suivre , pour divers réactifs indicateurs colorés , l'évolution passée de la réaction de chacun d'eux , en fonction de sa coloration instantanée , d'autre part , de définir la loi de dépérissement et de surveillance de divers produits périssables , chacun par rapport à la courbe d'évolution de la coloration de chaque réactif indicateur , en fonction à la fois de la durée et des températures instantanées.

Suivant une autre caractéristique de l'invention , le dispositif indicateur chromatique se présente sous la forme d'une étiquette ou badge , qu'on appose sur la denrée périssable à surveiller. Cette apposition peut être effectuée par accrochage ou par collage.

Suivant une autre caractéristique de l'invention , l'ampoule à l'intérieur de laquelle évolue la réaction de variation de couleur est constituée par deux pochettes souples juxtaposées , séparées l'une de l'autre par une ligne de rupture de moindre résistance , et contenant,l' une certains constituants de la réaction , l'autre les éléments complémentaires , si bien que la réaction interne de variation de coloration commence seulement après que l'ampoule ait été soumise à un malaxage qui provoque la rupture de la ligne de séparation de moindre résistance entre les deux pochettes dont les contenus sont alors mélangés l'un à à l'autre ,ce qui amorce la réaction chimique ou biochimique.

Suivant une autre caractéristique de l'invention , l'étiquette ou badge est constitué par une enveloppe à double épaisseur munie d'une ouverture de regard , alors qu'à l'intérieur de cette enveloppe se trouve l'ampoule souple dont le contenu reste visible par transparence à travers l'ouverture , au moins une zone à colorations différentes étant enfin imprimées sur la face extérieure de l' enveloppe , à proximité de l'ouverture , pour permettre à chaque instant de comparer avec les couleurs de ces zones imprimées , la coloration affichée à cet instant par le réactif.

Le dessin annexé , donné à titre d'exemple non limitatif , permettra de mieux comprendre les caractéristiques de l'invention.

Figure 1 est une vue en perspective d'une ampoule transparente de type connu , à indicateur coloré de pH , destinée à entrer dans la fabrication d'un dispositif selon l'invention.

Figure 2 est une vue en perspective éclatée , montrant les divers éléments constitutifs d'un badge ou étiquette faisant partie du dispositif selon l'invention.

Figure 3 est une coupe suivant III - III (figure 2) , du badge terminé , prêt à l'emploi.

Figure 4 est une coupe analogue , montrant la manipulation qu'effectue l'opérateur immédiatement avant d'appliquer le badge sur le produit périssable à surveiller.

Figures 5 à 8 illustrent les phases successives d'évolution de deux badges selon l'invention appliqués sur un fromage.

Figures 9 à 11 sont des vues en plan , illustrant trois variantes de réalisation possibles , pour des badges ou étiquettes selon l'invention.

Figure 12 montre un dispositif électronique pour la lecture automatique selon l'invention.

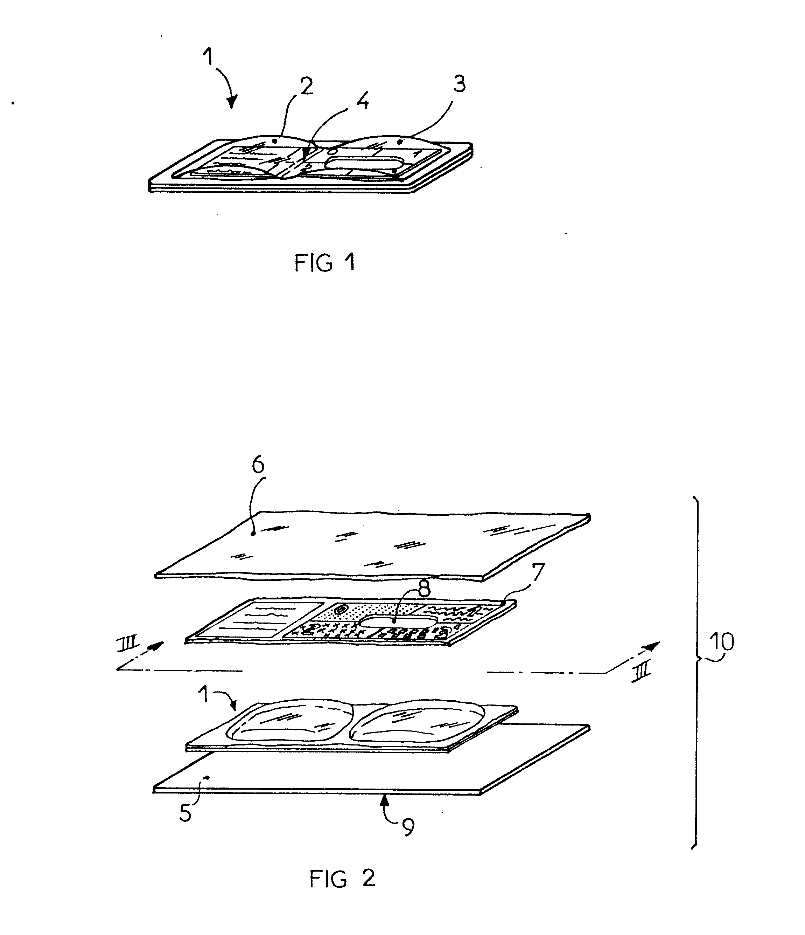

On a représenté sur la figure 1 , une ampoule souple 1 , de type connu , réalisée en matière plastique transparente , et définissant deux pochettes 2 et 3 , séparées par une ligne soudée 4 . Cette ligne soudée 4 constitue une ligne de moindre résistance entre les deux pochettes 2 et 3 , susceptible de céder si l'opérateur malaxe l' ampoule 1 . Les pochettes 2 et 3 contiennent , à l'origine , des produits susceptibles de se conserver intacts tant qu'ils sont séparés l'un de l'autre , tels que par exemple un substrat enzymatique et un produit chimique changeant de couleur au fur et à mesure qu'évolue son pH .

Selon l'invention ,on soude l'ampoule souple 1 , à l'intérieur d'une enveloppe présentant la structure illustrée sur la figure 2 . Cette enveloppe est formée de deux parois souples 5 et 6 , tandis qu'un cache 7 muni d'une ouverture découpée 8 est appliqué sur l'ampoule 1 , entre celle-ci et la paroi 6 qui est transparente .

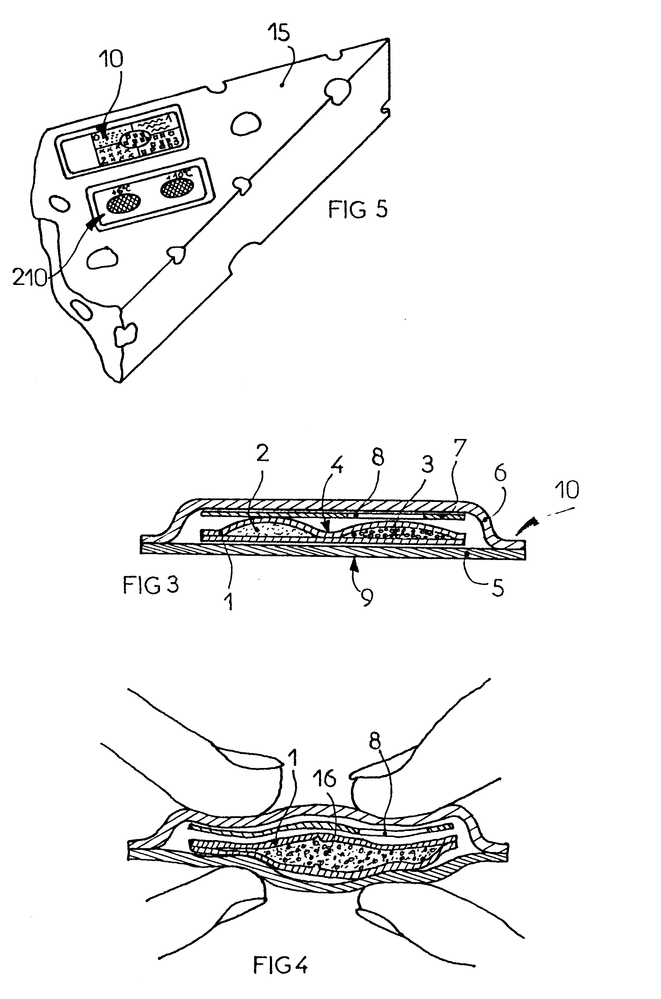

Le dos 9 de la paroi 5 est préférablement revêtu d'une couche d'un produit adhésif permettant de fixer sur tout support désiré , le badge ou étiquette 10 ainsi réalisé selon l'invention . L'assemblage des él"ments illustrés sur la figure 2 s'effectue par exemple par simple soudage périphérique des parois 5 et 6 de part et d'autre de l'ampoule 1 et du cache 7 qu'elles maintiennent entre elles . Le badge 10 terminé se présente sous la forme illustrée sur la figure 3 .

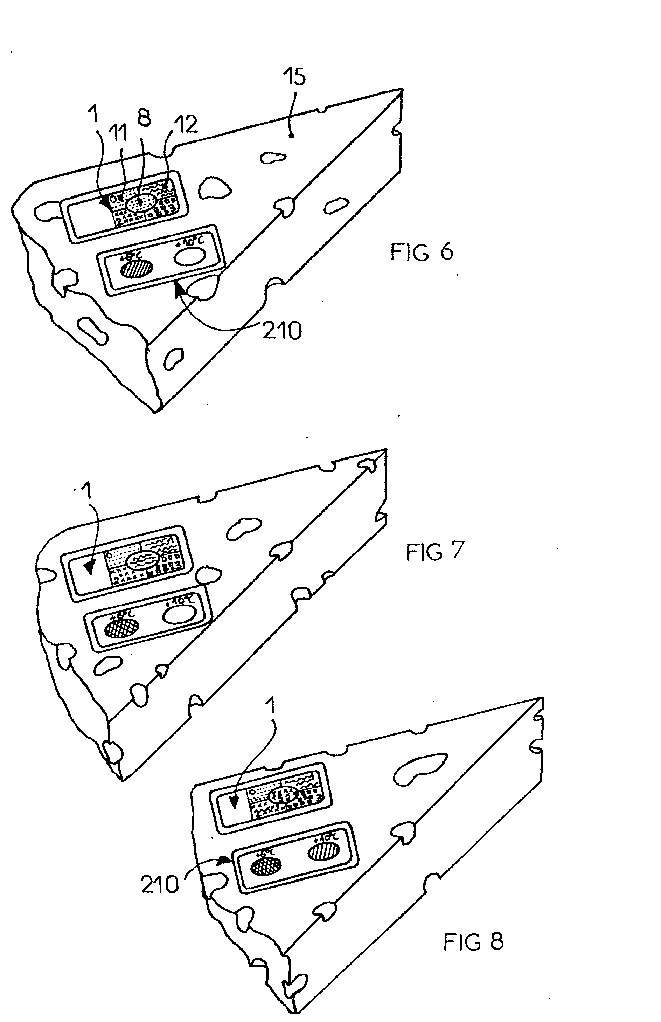

Dans l'exemple illustré sur les figures 2 à 9 , le cache 7 du badge 1 possède , autour de son regard 8 , quatre zones 11 , 12 , 13 , et 14 , possédant des colorations difféentes , choisies parmi celles que fait apparaître le contenu de l'ampoule 1 au cours de son évolution en fonction du temps et de la température .

Le fonctionnement est le suivant :

Dans l'exemple des figures 5 à 8 , on a supposé que le produit périssable à surveiller est un morceau de fromage 15 , du genre de ceux ;qu'on présente à la vente dans les supermarchés , généralement emballés sous un film en matière plastique transparente souple .

A l'instant considéré comme instant initial , l'opérateur saisit un badge ou étiquette 10 selon l'invention , à l'état vierge , tel qu'illustré sur la figure 3 . Il malaxe entre ses doigts le badge 10 , de façon à écraser les pochettes 2 et 3 , dont le contenu est ainsi mis sous pression , ce qui a pour effet , de faire sauter la ligne de séparation soudée 4 . En poursuivant le malaxage (figure 4) , l'opérateur mélange le contenu des deux pochettes 2 et 3 ,jusqu'à obtenir un mélange homogène 16 , dans la cavité désormais unique de l'ampoule souple 1 .

A compter de cet instant , commence une réaction biochimique , au cours de laquelle , va évoluer la couleur du mélange réactif 16 . Cette couleur est visible depuis l'extérieur à travers le regard 8 , qu'entourent les zones colorées de référence 11 , 12 , 13 , 14 .

Aussitôt après l'opération de malaxage illustrée sur la figure 4 , l'opérateur colle l'étiquette 10 sur l'emballage du fromage 15 à surveiller . L'évolution de la coloration du réactif 16 est visible à travers le regard 8 . Comme précédemment indiqué , cette évolution est fonction à la fois :

- de la durée ( c'est-à-dire de l'âge du fromage 15) ;

- de la succession des températures auxquelles le fromage 15 a été successivement stocké ( à chaque instant ,la vitesse d'évolution de la réaction chimique est fonction de la température environnante.

Il suffit donc de lire la couleur apparaissant dans le regard 8 , et de la comparer à celle de l'une des zones colorées 11 , 12 , 13 , 14 , pour connaître le passé du fromage 15 . Ce passé est ainsi gardé dans une sorte de mémoire chimique , dont la consultation s'effectue par simple lecture de la couleur visible à travers le regard 8 .

Bien entendu , une nuance donnée de la coloration visible dans le regard 8 peut signifier sur un certain produit , que ce dernier est encore frais , alors que sur une autre denrée périssable , elle signifierait que celle-ci est périmée . Ainsi se pose le problème de l'interprétation de la coloration visible dans le regard 8 . Pour résoudre ce problème , l'invention prévoit d'établir des courbes de références , ou abaques , dont chacune est caractéristique d'un produit donné . Par ailleurs , on remarque , sur l'étiquette illustrée sur les figures 2 à 9 , que les zones teintées de références 11 , 12 , 13 , 14 , ne portent pas des indications telles que " très frais " , " satisfaisant " , ou " périmé ": au contraire , ces zones teintées 11 , 12 , 13 , 14 , sont simplement repérées par des numéros " 0 " , " 1 " , " 2 " , " 3 " . L'interprétation de chacun de ces numéros varie en fonction de la nature du produit ou denrée périssable ( par exemple le fromage 15) , sur lequel est collé le badge 10 . Ainsi , on peut avoir par exemple un abaque pour telle sorte de jambon , un abaque différent pour la conservation d'un certain vaccin médical , encore un autre abaque pour un type donné de beurre , etc...

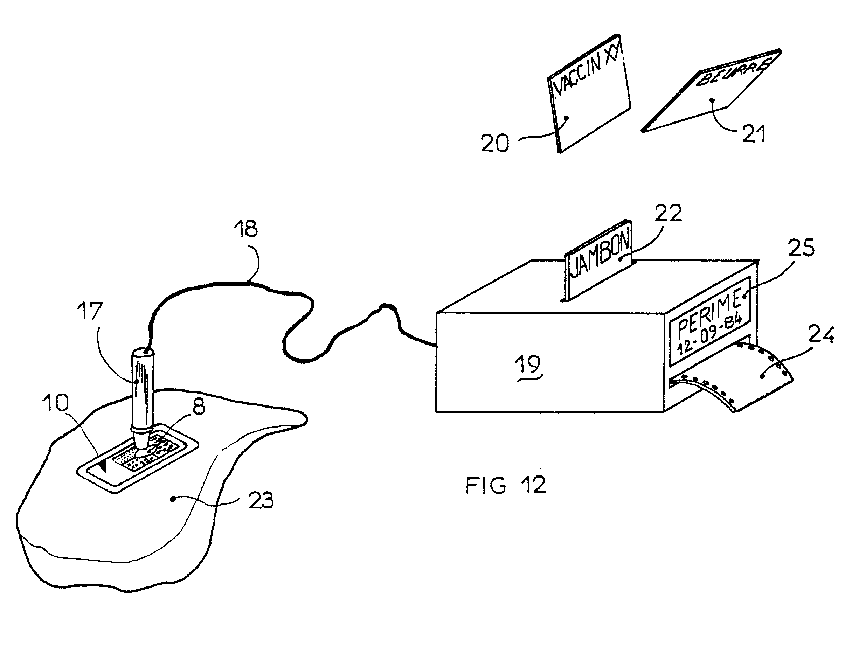

Suivant une autre caractéristique de l'invention , illustrée sur la figure 12 , la lecture du badge 10 s'effectue à l'aide d'un capteur-lecteur de couleurs 17 . Ce dernier est relié par un fil souple 18 à un boîtier 19 contenant l'electronique des lecteurs de couleurs proprement

‹its . Ce boîtier 19 est prévu pour recevoir des cartes de programmation telles que 20 pour un vaccin , 21 pour un beurre , 22 pour un jambon de catégorie donnée , etc...Dans l' exemple de la figure 12 , le badge 10 est collé sur l'emballage d'un jambon 23 . Le lecteur de couleurs 17 est présenté devant le regard 8 du badge 10 , cependant que l'opérateur a placé dans le boîtier de lecture 19 , la carte 22 correspondant à ce type de jambon . Aussitôt , la machine fait apparaître sur un écran 25 , l'appréciation correspondante ( par exemple : " périmé - 12.9.84") et peut en même temps imprimer un ticket détachable 24 .

Comme précédemment indiqué , on voit que l'invention permet :

- non seulement d'informer l'opérateur ou l'acheteur sur l' état instantané du produit tel que 15 ou 23 ;
- mais aussi , au magasinier et aux expéditeurs de gérer un stock de denrées périssables

En effet , bien que chronologiquement plus récent , un fromage peut avoir été stocké à plus haute température qu'un autre ( et ceci même de façon passagère) . Dans ces conditions , le magasinier doit organiser en premier lieu , l'expédition du second fromage , bien qu'il soit plus récent que le premier .

Une application particulièrement intéressante est constituée par la gestion du poisson pêché en mer . En effet , les chalutiers partent habituellement en mer pour cinq ou six jours , avant de rentrer au port où ils déversent leurs poissons . Actuellement , la date prise en référence est celle à laquelle le poisson est livré au port. En fait , cette date ne correspond pas à l'état réel du produit : en effet , certains poissons ont été pêchés le jour même , alors que d'autres sont déjà vieux de quelques jours. De plus , les températures auxquelles le poisson est conservé sur les bateaux avant de rentrer au port , sont souvent aléatoires . Il en résulte une incertitude considérable sur la qualité instantanée d'un poisson à un moment donné . Cette incertitude conduit en pratique à des gaspillages ou à des rebuts de marchandises.

L'invention permet au contraire direc-

...tement au pêcheur d'appliquer un badge 10 sur les caisses de poissons , au moment même de la pêche . Autrement dit , lorsque le bateau rentre au port et déverse sa cargaison ,la coloration des divers badges 10 permet déjà de différencier les caisses de poissons et de les gérer en conséquence .

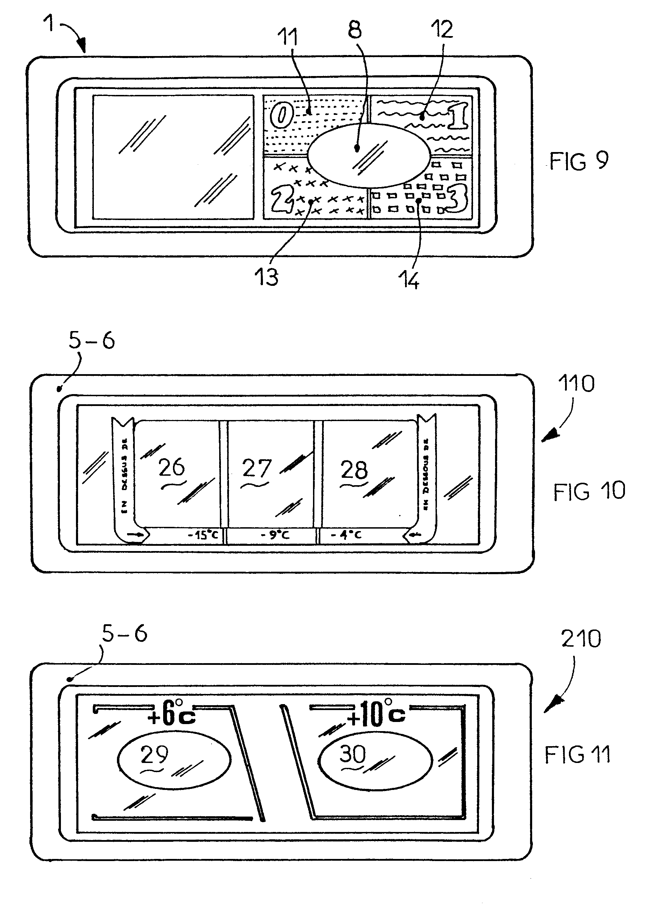

On a représenté sur les figures 10 et 11 deux variantes de réalisation possibles , pour des badges 10 selon l'invention .

On a représenté sur les figures 10 et 11 deux variantes de réalisation possibles pour des badges 10 selon l'invention.

Le badge 110 illustré sur la figure 10 regroupe , à l'intérieur de son enveloppe transparente 5 ,6, trois ampoules souples 26 , 27 , 28 , contenant chacune un réactif coloré qui , dans le présent exemple , est défini ainsi :

- le réactif de l'ampoule 26 possède une première coloration et la conserve tant qu'il n'est pas porté à une température supérieure à - 15° C ; par contre , s'il est porté à
- une température supérieure à - 15° C , sa coloration change pour devenir une coloration numéro 2 , qu'il conservera ensuite constamment , même s'il est ramené à une température inférieure à - 15° C .
- le réactif de l'ampoule 27 passe de la même façon d'une première à une seconde coloration , dès que sa température s'élève ,même passagèrement , au-dessus de - 9° C ;
- le réactif de l'ampoule 28 passe , à son tour , d'une première à une seconde coloration , dès que sa température s' élève , même passagèrement, au-dessus de - 4° C .

Chacune des trois ampoules 26 , 27 , 28 est caractérisée par l'inscription correspondante " - 15° C ", " - 9° C " , " -4° C " .

Un tel badge 110 est utilisable en liaison avec le badge 1 , précédemment décrit , notamment pour équiper des produits congelés . On sait que la conservation de ces denrées alimentaires cesse d'être satisfaisante si ces produits sont , même temporairement , portés à une température dépassant une limite prédéterminée . En particulier , on sait qu'un produit congelé , s'il vient à être temporairement décongelé , ne peut plus être recongelé , sous peine de devenir inutilisable .En fait , il est souvent souhaitable que la température de conservation ne s'élève jamais au-dessus d'une limite souvent très inférieure à 0° C . si l'on place le badge 110 sur un produit , à côté d'un badge 1 du genre précité , les mémoires chimiques ainsi réalisées , permettront aux consommateurs , ou aux gestionnaires d'un stock:

- non seulement de situer le degré de fraîcheur du produit ( par lecture du badge 1) ;

- mais encore de savoir si les températures de stockage ont , ou n'ont pas , dépassé , même temporairement , des limites prédéterminées ( par exemple - 15° C , -9° C , - 4° C ) .

Sur la figure 11 , on a représenté une autre variante 210 , d'un badge selon l'invention , plus particulièrement prévu pour équiper des produits tels que les fruits , légumes , ou produits laitiers . En effet , ces produits ne doivent jamais être congelés , mais leur température de conservation doit préférablement rester aux environs de + 5° C . Pour cela , l'enveloppe transparente souple 5 , 6 , du badge 210 contient deux ampoules de réactifs chimiques 29 et 30 , à savoir :

- une ampoule 29 , dont le contenu passe d'une première coloration à une seconde coloration , dès que sa température de stockage a dépassé , même temporairement , la température de + 6° C ;

- le réactif contenu dans l'ampoule 30 passe d'une première coloration à une seconde coloration , dès que sa température excède , même temporairement , + 10° C .

Bien entendu , les indications correspondantes " + 6° C " , et " + 10° C " figurent , à côté des ampoules 29 et 30 , sur l'enveloppe 5 , 6 .

Une telle étiquette 210 peut être placée par exemple sur le fromage 15 des figures 5 à 8 , à côté de l'étiquette 6 . Ainsi , le consommateur ou le gestionnaire d'un stock peut apprécier , par simple lecture des couleurs:

- l'état de fraîcheur du fromage 15 , tel que l'indique le badge 10 ;

- si à aucun moment , la température de stockage n'a dépassé les limites de + 6° C , ou + 10° C , comme indiqué par le badge 210.

Bien entendu , comme indiqué ci-dessus , l'invention peut être utilisée , avec ou sans lecteur chromatique 17 , pour identifier les produits périssables les plus divers : produits alimentaires, poissons, viandes, produits laitiers, sérums ou vaccins médicaux ou vétérinaires, etc...

De même, l'invention peut être utilisée pour gérer les stocks ou la distribution de divers produits périssables. Par exemple, pour un centre de distribution assurant le stockage et l'expédition de fromages vers différentes villes , on pourra lire directement sur des abaques , que :

- telle longueur d'ondes correspondant à la couleur lue dans le regard 8 correspond à des fromages à expédier vers LILLE ;
- telle autre longueur d'ondes caractérisera des fromages à expédier vers LYON;
- une autre valeur de la longueur d'ondes définira des fromages à expédier vers MARSEILLE;
- etc...

La lecture de la couleur du réactif dans le badge correspond à lire la courbe caractéristique du réactif.

Par contre, la comparaison avec l'abaque consiste à lire cette fois la courbe caractéristique du produit périssable. Ainsi, pour un badge donné, contenant un réactif donné, toujours le même, l'invention conduit à comparer avec plusieurs abaques en fonction de la nature des produits périssables sur lesquels le badge est apposé.

Bien entendu on prévoit dans l'appareil 19, une phase initiale de vérification pour constater la couleur ( et la longueur d'onde ) apparaissant dans l'ampoule 1 au moment de l'activation du réactif lors de l'apposition du badge 10. Si la couleur initiale lue est jugée hors tolérances, l'utilisateur élimine le badge. Cette phase initiale de vérification peut donner lieu à un affichage de contrôle, et être intégrée à la gestion du stock par ordinateur.

**0177432**

En ce qui concerne l'élément de base contenu dans le mélange 16 ,c'est l'évolution enzymatique des enzymes sur le substrat qui est révélé par une évolution chromatique , elle-même observée par le lecteur.

On peut imaginer dans le temps que d'autres méthodes de lecture physique puissent être utilisées , telles que infra-rouges ,micro-ondes , laser , etc.. c'est-à-dire une mesure d'ondes simplement différentes .

Etant donné qu'actuellement , la lecture chromatique n'est qu'une interprétation de mesure d'une certaine longueur d'ondes ,on peut imaginer que dans l'avenir , on puisse mesurer l'évolution enzymatique de l'indicateur par d'autres longueurs d'ondes ,tel qu'indiqué ci-dessus de façon non limitative .

REVENDICATIONS

1 - Dispositif indicateur, destiné à être utilisé en liaison avec des denrées périssables, à la fois pour caractériser leur état instantané de conservation et pour permettre une gestion prévisionnelle des produits en stock, caractérisé en ce qu'il comprend en combinaison:

- au moins une ampoule transparente (1) contenant un indicateur de pH, dont l'évolution biochimique en fonction du temps et de la température engendre une variation continue de la coloration;

- un document de référence, ou abaque, dans lequel figurent à la fois les éléments permettant de suivre, pour divers réactifs indicateurs colorés tels que (16), l'évolution passée de la réaction de chacun d'eux, en fonction de sa coloration instantanée, d'autre part, de définir la loi de dépérissement et de surveillance de divers produits périssables tels que (15) et (23), chacun par rapport à la courbe d'évolution de la coloration de chaque réactif indicateur tel que (16), en fonction à la fois de la durée et des températures instantanées.

2 - Dispositif indicateur suivant la revendication 1, caractérisé en ce qu'il comporte en outre une enveloppe de support (5), (6), sur laquelle figurent au voisinage d' une partie visible de l'ampoule (1), au moins une zone de référence (11), ayant une couleur fixe donnée, choisie parmi celles par lesquelles passe le réactif indicateur (16) au cours de l'évolution de sa réaction.

3 - Dispositif indicateur suivant la revendication 2, caractérisé ence que le réactif indicateur chromatique (16) est présenté sous la forme d'une étiquette ou badge (10) qu'on appose sur la denrée périssable (15) ou (23) à surveiller.

4 - Dispositif indicateur suivant l'une quelconque des revendications précédentes, caractérisé en ce que l'ampoule (1), à l'intérieur de laquelle évolue la réaction de variation de couleur est constituée par deux pochettes souples juxtaposées (2), (3), séparées l'une de l'autre par une ligne de rupture de moindre résistance (4) et contenant, l' une certains constituants de la réaction, l'autre les éléments complémentaires, si bien que la réaction biochimique de coloration commence seulement après que l'ampoule (1) ait été soumise à un malaxage qui provoque la rupture de la ligne de séparation de moindre résistance (4) entre les deux pochettes (2) et (3), dont les contenus sont alors mélangés l'un à l'autre, en un mélange réactif (16).

5 - Dispositif indicateur suivant l'une quelconque des revendications 3 et 4, caractérisé en ce que l'étiquette ou badge (10) est constitué par une enveloppe (5), (6), à double épaisseur, munie d'une ouverture de regard (8), alors qu'à l'intérieur de cette enveloppe se trouve l'ampoule souple (1) dont le contenu (16) reste visible par transparence, à travers l'ouverture (8), au moins une zone (11) colorée étant enfin imprimée sur la face extérieure de l'enveloppe (5), (6), à proximité de l'ouverture (8), pour permettre, à chaque instant, de comparer avec les couleurs de ces zones imprimées (11), (12), la coloration affichée à cet instant par le réactif (16).

6 - Dispositif suivant l'une quelconque des revendications précédentes, caractérisé en ce qu'autour de l'ouverture (8) sont réparties quatre zones de référence (11), (12), (13), (14), colorées différemment.

7 - Dispositif suivant l'une quelconque des revendications précédentes, caractérisé en ce qu'il comporte aussi un badge (110) contenant au moins une ampoule (26) dont le réactif change de couleur à une température inférieure à 0° C.

8 - Dispositif suivant l'une quelconque des revendications précédentes , caractérisé en ce qu'il comporte aussi un badge (210) contenant au moins une ampoule (29) dont le réactif change de couleur à une température supérieure à 0° C.

9 - Dispositif suivant la revendication 7 , caractérisé en ce que le badge (110) comporte:

- une ampoule (26) dont le réactif change de couleur dès que sa température excède , même temporairement , - 15° C ;

- une ampoule (27) , dont le réactif change de couleur , dès que sa température excède , même temporairement ,

15

- 9° C ;

- une ampoule (28° , dont le réactif change de couleur dès que sa température excède , même temporairement , - 4° C.

10 - Dispositif suivant la revendication 7 , caractérisé en ce que le badge (210) . comporte :

- une ampoule (29) dont le réactif change de couleur dès que sa température excède , même temporairement , + 6° C;

- une ampoule (30) dont le réactif change de couleur dès que sa température excède , même temporairement , + 10° C.

11 - Dispositif suivant l'une quelconque des revendications précédentes , caractérisé en ce qu'il comporte aussi un lecteur chromatique (17) relié à un boîtier électronique (19) , prévu pour :

- recevoir des cartes de programmation (20) , (21) , (22) , constituant des documents de référence ;

- afficher un résultat d'appréciation sur un écran (25) ou sur un ticket (24) ou par tout autre moyen.

12 - Dispositif suivant l'une quelconque des revendications précédentes , caractérisé en ce qu'il comporte aussi un lecteur chromatique électronique .

FIG 1

FIG 2

0177432

PL.2/5

FIG 5

FIG 3

FIG 4

15

1
11  8  12

FIG 6

210

1

FIG 7

1

210

FIG 8

FIG 9

FIG 10

FIG 11

26   27   28

-15°C   -9°C   -4°C

EN DESSUS DE   EN DESSOUS DE

+6°c   +10°c

29   30

FIG 12

Office européen
des brevets

# RAPPORT DE RECHERCHE EUROPEENNE

**0177432**
Numero de la demande

EP  85 42 0171

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | GB-A-1 323 833  (FOOD CONTROL)<br>* Revendications 1-3 *<br>--- | 1,4,9 | G 01 N  31/22 |
| A | US-A-2 823 131  (POWER)<br><br>* Revendications 1,3 *<br>--- | 1,3,4, 9 | |
| A | US-A-3 996 007  (FANG)<br><br>* Revendications 1,2 *<br>--- | 1,3,4, 9 | |
| A | FR-A-1 548 424  (LERCH)<br><br>----- | | |

**DOMAINES TECHNIQUES RECHERCHES (Int Cl.4)**

G 01 N

Le present rapport de recherche a été établi pour toutes les revendications

| Lieu de la recherche<br>LA HAYE | Date d achèvement de la recherche<br>01-12-1985 | Examinateur<br>NICOLAS H.J.F. |
|---|---|---|

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-ecrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03 82